# EUROPEAN PATENT APPLICATION

(11) **EP 2 306 341 A1**
(43) Date of publication of application: **06.04.2011**
(21) Application number: 10165676.7
(22) Date of filing: 11.06.2010
(51) Int. Cl.: G06F 17/30

(54) **Candidate presentation apparatus, candidate presentation method, and candidate presentation program**

(30) Priority: 29.09.2009 JP 2009225382
(71) Applicant: Kabushiki Kaisha Toshiba, Minato-ku Tokyo (JP)
(72) Inventor: Shimomori, Taishi, Tokyo (JP); Kano, Jun, Tokyo (JP); Manabe, Toshihiko, Tokyo (JP)
(74) Representative: HOFFMANN EITLE

(57) **Abstract**

A candidate presentation apparatus includes: an extracting configured to extract a character string included in input data and apply an attribute to the character string with reference to a dictionary; a reading annotation applying module configured to apply a reading annotation to the extracted character string with reference to the dictionary; an index generating module configured to determine whether plural types of characters or words are included in the extracted character string and associates at least one of the reading annotation from a position where the type of character is changed and the reading annotation of the word in addition to the attribute and the reading annotation with the extracted character string based on the determination result to generate index data; a storage module configured to store the index data; a receiving module configured to receive an input character string; a matching check module configured to check matching between the reading annotation of the input character string and the reading annotation of the character string stored in the storage module and receives the character string stored in the storage unit based on the matching check result; and a candidate presentation module configured to present the character string received by the matching check module as a conversion candidate.

## Description

### CROSS-REFERENCE TO THE RELATED APPLICATION(S)

The present application is based upon and claims priority from prior Japanese Patent Application No. 2009-225382, filed on September 29, 2009, the entire contents of which are incorporated herein by reference.

### BACKGROUND

### 1. Field

The present invention relates to a candidate presentation apparatus, a candidate presentation method, and a candidate presentation program for presenting a character string as a candidate for an input character string.

### 2. Description of the Related Art

A candidate presentation apparatus has been proposed which extracts a character string included in the received content, stores the extracted character string in a storage unit, and presents a portion of or the entire stored character string as a conversion candidate to the user. In the candidate presentation apparatus, a character string that is identical to a portion of the entire character or character string input by the user is extracted from the storage unit. An example of such apparatus is disclosed in JP-A-2007-114932.

However, in the candidate presentation apparatus according to the related art, the character string that is identical to a portion of the input character or character string is extracted. That is, a character string that is identical to the input character or character string from a position (hereinafter, referred to as a middle position) other than the head of the input character or character string is also presented as a candidate character string to the user. Therefore, an inappropriate character string (for example, when an input character string is 'ski', a character string 'Chaikovski') is likely to be presented to the user as a candidate character string. In addition, when a character string that is matched with that in the middle of the input character or character string is presented as a candidate character string, a large number of character strings are presented to the user. Therefore, memory capacity required for such process increases.

### SUMMARY

One of objects of the present invention is to provide a candidate presentation apparatus, a candidate presentation method, and a candidate presentation program capable of preventing an inappropriate character string from being presented.

According to a first aspect of the present invention, there is provided a candidate presentation apparatus including: a dictionary in which attributes and reading annotations of character strings are stored so as to be associated with each other; an extracting configured to extract a character string included in input data and apply an attribute to the character string with reference to the dictionary; a reading annotation applying module configured to apply a reading annotation to the extracted character string with reference to the dictionary; an index generating module configured to determine whether plural types of characters or words are included in the extracted character string and associates at least one of the reading annotation from a position where the type of character is changed and the reading annotation of the word in addition to the attribute and the reading annotation with the extracted character string based on the determination result to generate index data; a storage module configured to store the index data; a receiving module configured to receive an input character string; a matching check module configured to check matching between the reading annotation of the input character string and the reading annotation of the character string stored in the storage module and receives the character string stored in the storage unit based on the matching check result; and a candidate presentation module configured to present the character string received by the matching check module as a conversion candidate.

According to a second aspect of the present invention, there is provided a candidate presentation method including: extracting a character string included in input data and applying an attribute to the character string with reference to a dictionary in which attributes and reading annotations of character strings are stored so as to be associated with each other; applying a reading annotation to the extracted character string with reference to the dictionary; determining whether plural types of characters or words are included in the extracted character string and associating at least one of the reading annotation from a position where the type of character is changed and the reading annotation of the word in addition to the attribute and the reading annotation with the extracted character string based on the determination result to generate index data; storing the index data; receiving an input character string; checking a matching between the reading annotation of the input character string and the reading annotation of the stored character string and receiving the stored character string based on the matching check result; and presenting the character string received by the matching check module as a conversion candidate.

According to a third aspect of the present invention, there is provided a computer readable medium containing a program that causes a computer to perform a series of procedures including: extracting a character string included in input data and applying an attribute to the character string with reference to a dictionary in which attributes and reading annotations of character strings are stored so as to be associated with each other; applying a reading annotation to the extracted character string with reference to the dictionary; determining whether plural types of characters or words are included in the extracted character string and associating at least one of the reading annotation from a position where the type of character is changed and the reading annotation of the word in addition to the attribute and the reading annotation with the extracted character string based on the determination result to generate index data; storing the index data; receiving an input character string; checking a matching between the reading annotation of the input character string and the reading annotation of the stored character string and receiving the stored character string based on the matching check result; and presenting the character string received by the matching check module as a conversion candidate.

### BRIEF DESCRIPTION OF THE DRAWINGS

A general configuration that implements the various features of the present invention will be described with reference to the drawings. The drawings and the associated descriptions are provided to illustrate embodiments of the invention and not to limit the scope of the invention.
Fig. 1 is a view illustrating a candidate presentation apparatus according to an embodiment of the invention.
Fig. 2 is a view illustrating a configuration of the candidate presentation apparatus according to the embodiment.
Fig. 3 is a view illustrating a functional configuration of the candidate presentation apparatus according to the embodiment.
Fig. 4 is a view illustrating a data structure of an index DB.
Fig. 5 is a view illustrating the data structure of a node.
Fig. 6 is a view illustrating the data structure of an index.
Fig. 7 is a view illustrating the data structure of a table.
Fig. 8 is a view illustrating the data structure of EPG information.
Fig. 9 is a flowchart illustrating an operation of an index generating module.
Fig. 10 is a flowchart illustrating the operation of the index generating module.
Fig. 11 is a flowchart illustrating the operation of the index generating module.
Fig. 12 is a flowchart illustrating an operation of presenting a conversion candidate.
Fig. 13 is a view illustrating an example of a presentation screen.
Fig. 14 is a view illustrating an example of the presentation screen.
Fig. 15 is a flowchart illustrating the operation of the candidate presentation apparatus according to the embodiment.

### DETAILED DESCRIPTION

An embodiment according to the present invention will be described in detail with reference to the accompanying drawings. The scope of the claimed invention should not be limited to the examples illustrated in the drawings and those described below.

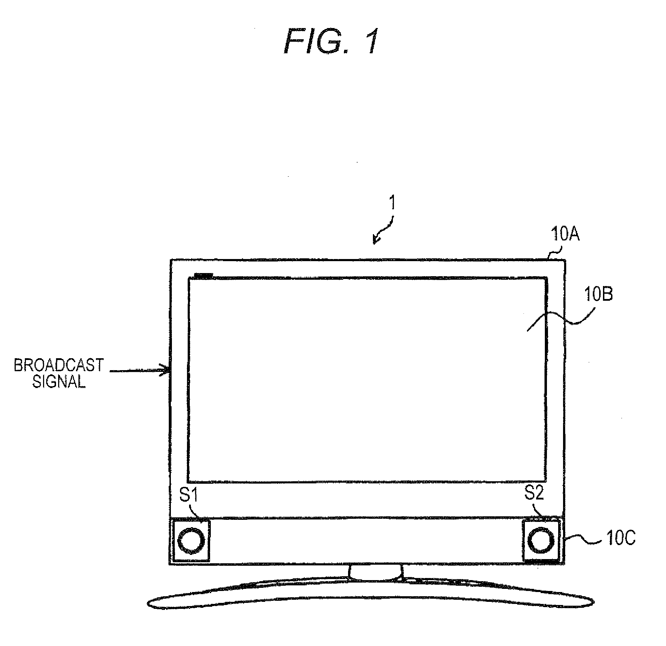

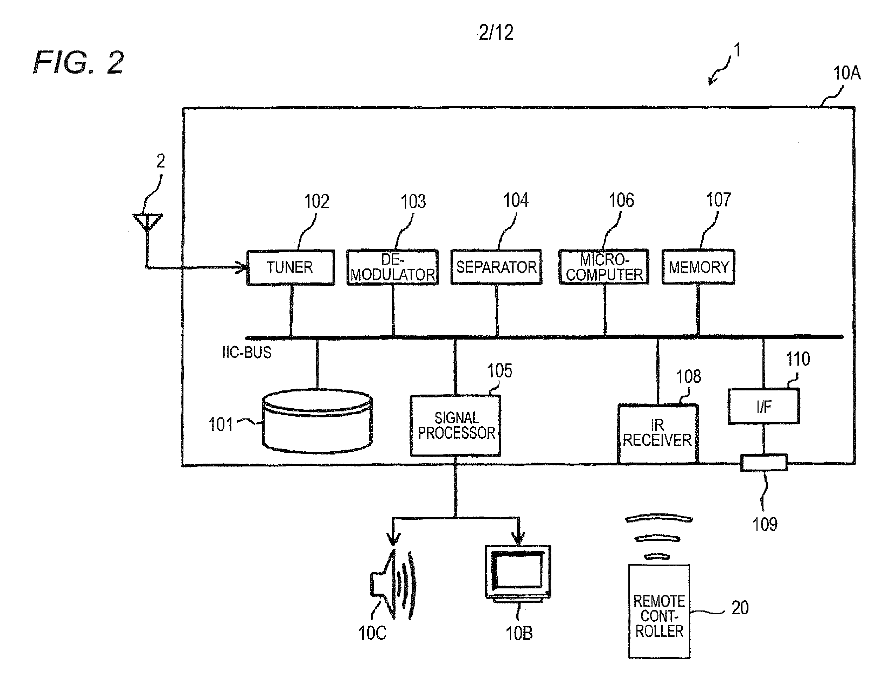

Fig. 1 is a view illustrating a candidate presentation apparatus according to an embodiment. Fig. 2 is a view illustrating the configuration of the candidate presentation apparatus according to the embodiment. In the embodiment, a digital television (hereinafter, referred to as a digital TV) 1 is given as an example of the candidate presentation apparatus. The candidate presentation apparatus is not limited to the digital TV 1, but it may be, for example, a PC, a mobile phone, or a PDA.

The digital TV 1 includes an STB (Set Top Box) 10A, a display unit 10B, and an audio output unit 10C as main components.

The STB 10A includes an HDD 101, a tuner 102, a demodulator 103, a separator 104, a signal processor 105, a microcomputer 106, a memory 107, an IR receiver 108, a terminal 109, and an I/F 110.

The HDD (Hard Disk Drive) 101 stores, for example, recorded digital broadcasting programs, EPG information (electronic program guide information), index data (index DB) obtained by extracting a character string (character string data) from the EPG information and giving a reading annotation or an attribute (meaning class) to the extracted character string, a dictionary (dictionary DB) for performing morphological analysis on a character string and giving a reading annotation or an attribute to the character string, and previous EPG information. The previous EPG information is the EPG information of a recorded broadcast program. For example, an SSD (Solid State Drive) using a flash memory may be used as the HDD 101.

The tuner 102 selects a desired channel from the digital broadcast signal received by an antenna 2. The demodulator 103 demodulates the digital broadcast signal selected by the tuner 102 to generate a TS (transport stream).

The separator 104 separates, for example, broadcast signals (an audio ES (audio signal) and a video ES (video signal)) and SI/PSI from the TS generated by the demodulator 103.

The TS is a multiplexed signal including the broadcast signals and the SI/PSI. The broadcast signal is, for example, an MPEG-2 broadcast signal. The broadcast signal includes the audio ES (Audio Elementary Stream) and the video ES (Video Elementary Stream) obtained by respectively encoding video and audio signals. The PSI is information indicating which program is included in the TS and to which program each ES of the TS belongs. In addition, the SI includes the EPG information.

The signal processor 105 decodes the audio ES and the video ES separated by the separator 104 and generates a video signal and an audio signal. The signal processor 105 inputs the audio signal to the audio output unit 10C and the video signal to the display unit 10B.

The audio output unit 10C includes speakers S 1 and S2 that output the audio signal input from the signal processor 105. The display unit 10B displays the video signal input from the signal processor 105 (for example, an LCD (Liquid Crystal Display) or a CRT (Cathode Ray Tube)).

The microcomputer 106 controls the overall operation of the digital TV 1.

The memory 107 includes a ROM, a RAM (Random Access Memory), and an NVRAM (Nonvolatile RAM). The ROM stores operation codes of the microcomputer 106. The RAM is used during the operation of the microcomputer 106. The NVRAM stores, for example, firmware.

The IR receiver 108 receives operation signals, such as infrared rays, wirelessly transmitted from a remote controller 20. The remote controller 20 includes various keys required to input character strings, such as a 'cursor' key, an 'enter' key, a 'character' key, and a 'conversion' key The user uses the remote controller 20 to input character strings.

The terminal 109 is for connecting an external recording apparatus, such as a DVD recorder or an HDD recorder. The I/F (Interface) 110 is for data communication between the external recording apparatus connected to the terminal 109 and the microcomputer 106.

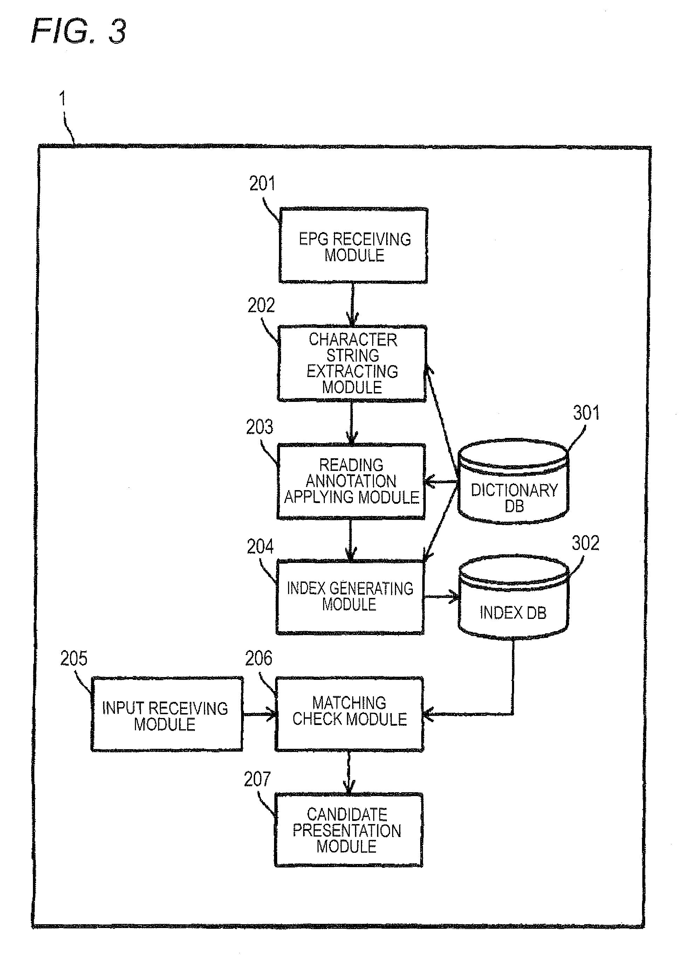

Fig. 3 is a view illustrating the functional configuration of the digital TV 1 according to the embodiment. The digital TV 1 includes an EPG receiving module 201, a character string extracting module 202, a reading annotation applying module 203, an index generating module 204, an input receiving module 205, a matching check module 206, a candidate presentation module 207, a dictionary DB (Database) 301, and an index DB 302. In order to implement the functions shown in Fig. 3, firmware is loaded to the RAM and the microcomputer 106 executes the firmware according to the operation codes.

The dictionary DB 301 stores a dictionary that is referred to by the character string extracting module 202, the reading annotation applying module 203, and the index generating module 204. The dictionary is used to perform morphological analysis on the extracted character string and give a reading annotation or an attribute to the character string.

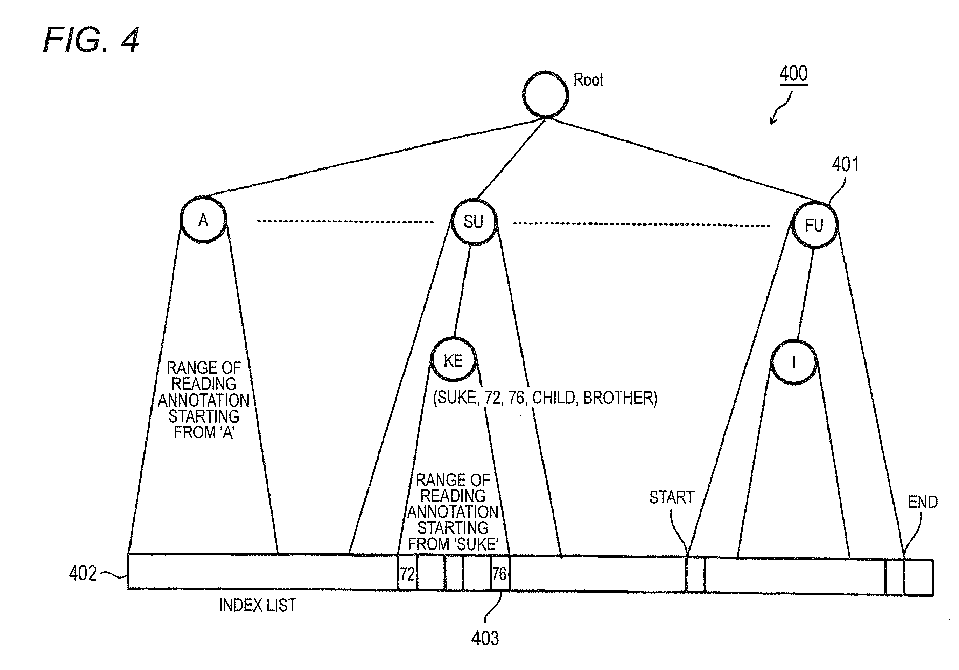

The index DB 302 stores index data generated by the index generating module 204. The index data is configured by data shown in Figs. 4 to 7.

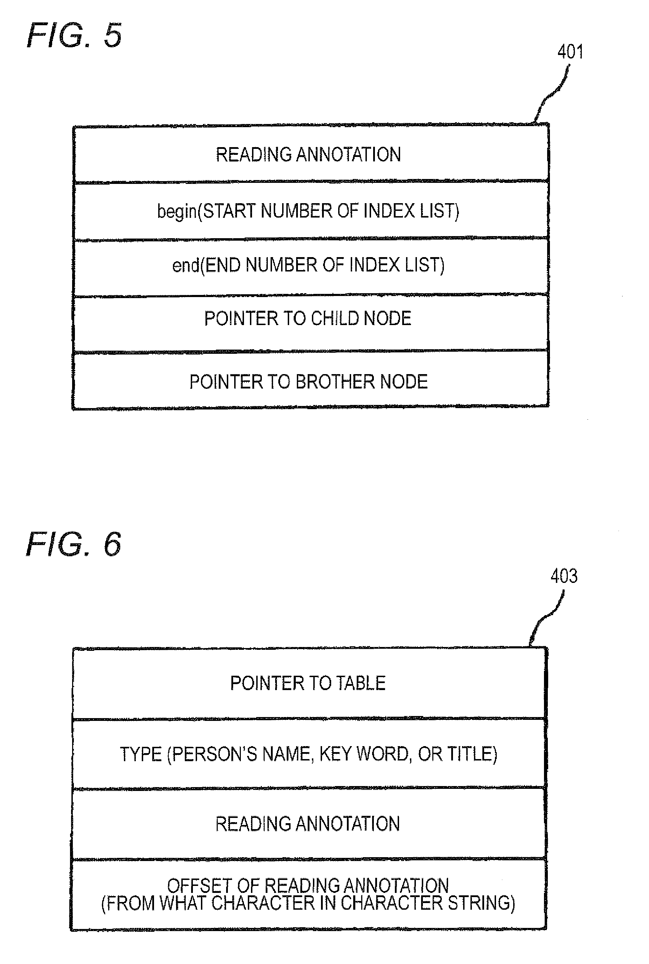

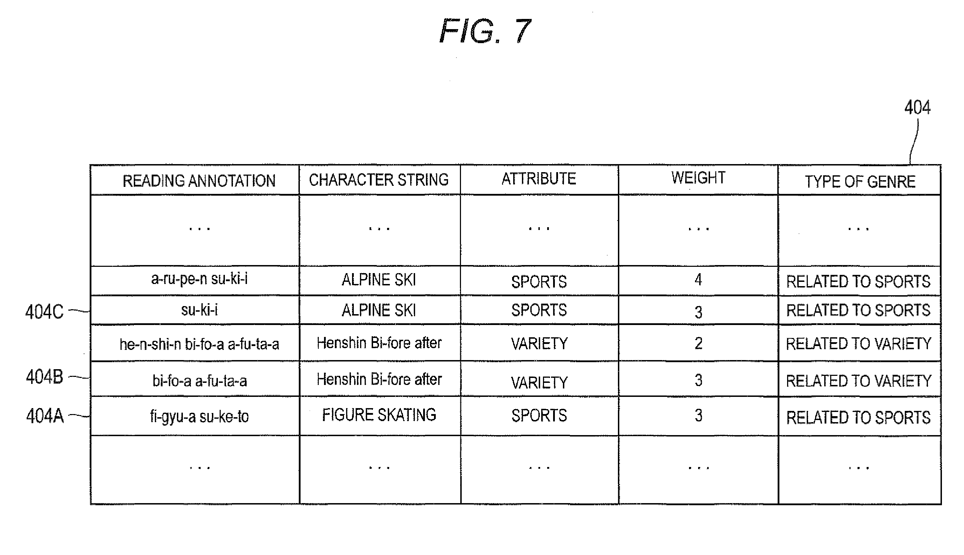

Fig. 4 is a view illustrating the data structure of the index data stored in the index DB 302. Fig. 5 is a view illustrating the data structure of a node 401. Fig. 6 is a view illustrating the data structure of an index 403. Fig. 7 is a view illustrating the data structure of a table 404.

In the index DB 302, data has a Trie structure (prefix tree structure), which is a type of ordered tree data structure. In Fig. 4, a key word is written in a circle indicating the node 401. The node 401 includes a reading annotation, a start number, an end number, a first pointer, and a second pointer (see Fig. 5). The reading annotation is information indicating how a character string is read (pronounced) and is generally indicated by hiragana characters. The start number is the start number of a corresponding index list 402. The end number is the end number of a corresponding index list 402.

The first pointer is information (address information) indicating the storage position of data at a child node. The second pointer is information indicating the storage position of data at a brother node. For example, when the key word is a 'fu' node 401, the first pointer is an address indicating the storage position of data at an 'i' node 441 shown in Fig. 4. In addition, when the second pointer is addresses indicating the storage positions of data at the nodes 401 having key words 'su' and 'a' parallel to 'fn' written therein.

The index list 402 includes a plurality of indexes 403 (see Fig. 4). The index 403 includes elements 'pointer', 'type', 'reading annotation', and 'offset' (see Fig. 6). The 'pointer' is information indicating an address that indicates the storage position of data of an element of the table 404, which will be described below. The 'type' is information indicating whether the character string is a person's name, a key word, or a program title. The 'reading annotation' is for reading the character string (a hiragana character converted from a Chinese character or a katakana character). The 'offset' is information indicating the read start position of the character in the character string.

The table 404 includes elements 'reading annotation', 'character string', 'attribute', 'weight' and 'type of genre' (see Fig. 7). The 'reading annotation' is for reading a character string. The 'character string' is an extracted character string. The 'attribute' is the attribute of a character string, that is, information indicating whether a character string is the name of sports or the name of a person. The 'weight' is a coefficient indicating the degree of importance of a character string. The 'type of genre' is information indicating the type of genre of a program in which a character string is frequently used.

The EPG receiving module 201 receives the EPG information included in the SI that is separated by the separator 104 and the previous EPG information stored in the HDD 101. The previous EPG information means the EPG information of the program recorded on the HDD 101.

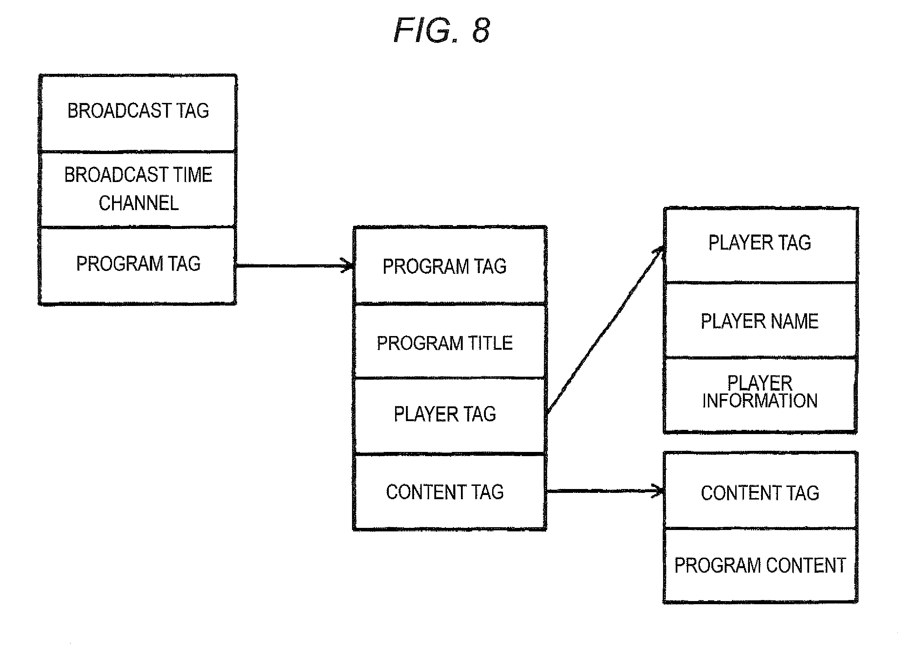

Fig. 8 is a view illustrating an example of the data structure of the EPG information. As shown in Fig. 8, the EPG information includes a plurality of data blocks (in this embodiment, four data blocks) linked to each other. A first block (left block in Fig. 8) includes a broadcast tag indicating a broadcast number, data indicating a broadcast time and channel, and a program tag indicating a block.

The second block includes a program tag for linking to the first block, data indicating a program title, a player tag indicating a third block, and a content tag indicating a fourth block.

A third block (the upper right side of Fig. 8) includes a player tag for linking to the second block and data indicating player information. A fourth block (the lower right side of Fig. 8) includes a content tag for linking to the second block and data indicating the content of the program.

The character string extracting module 202 extracts character strings, such as a program title, a player name, and a key word, from the received EPG information. The character string extracting module 202 divides the extracted character string into meaningful character strings (words) with reference to the dictionary that is stored in the dictionary DB 301, and gives an attribute (meaning class) and a program genre to each of the divided character strings.

The reading annotation applying module 203 applies a reading annotation to each of the character strings divided by the character string extracting module 202 with reference to the dictionary DB. The morphological analysis of the character string and the attachment of the attribute and the reading annotation by the character string extracting module 202 and the reading annotation applying module 203 can be performed by the technique disclosed in Japanese Patent No. 408156.

The index generating module 204 generates index data matched with the character string that is received from the input receiving module 205 based on the character string having the attribute or the reading annotation applied thereto which is input from the reading annotation applying module 203. The index generating module 204 stores the generated index data in the index DB 302.

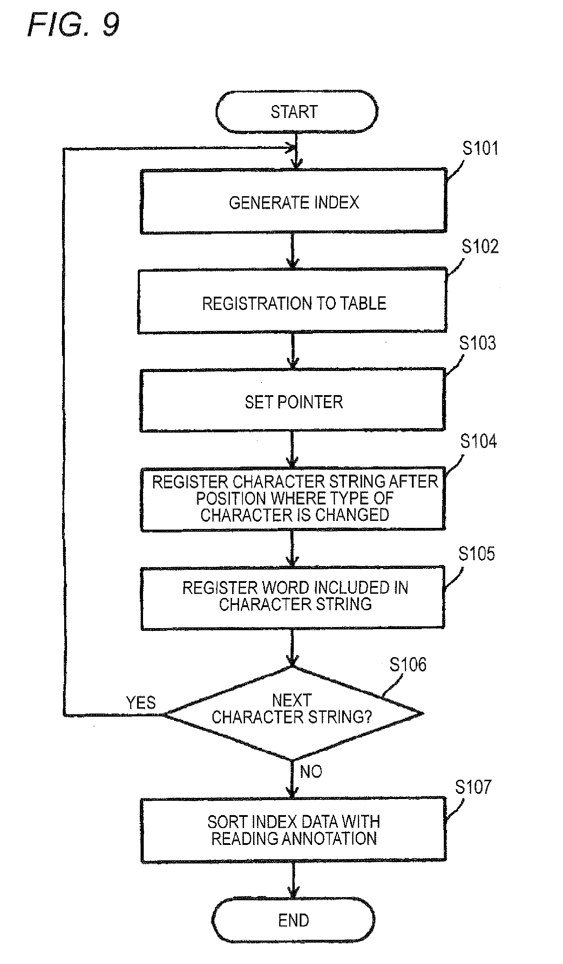

Figs. 9 to 11 are flowcharts illustrating the operation of the index generating module 204. Next, the generation of the index data will be described with reference to Figs. 9 to 11. An example in which the character string extracting module 202 extracts a character string 'figure skating' is considered.

The index generating module 204 generates the index 403 shown in Fig. 7 for the character string 'figure skating' (Step S101). The index generating module 204 registers the generated index 403 on the index list 402. The index generating module 204 sets the items 'type', 'reading annotation', and 'offset' of the index 403 to 'key word', 'figure skating', and '0', respectively.

Since the character string 'figure skating' is not a title or a person's name, the type is set to 'key word'. A reading annotation applied by the reading annotation applying module 203 is used as the read annotation. The offset is set to 0 since the 'reading annotation' starts at the beginning of the character string.

The index generating module 204 registers the character string 'figure skating' on the table 404 shown in Fig. 8 (Step S102). The index generating module 204 sets the items 'reading annotation', 'character string', 'attribute', 'weight', and 'the type of genre' of the table 404 to 'fi-gyu-a su-ke-to', 'figure skating', 'sports', '3', 'related to sports' (see 404A in Fig. 7).

A reading annotation applied by the reading annotation applying module 203 is used as the reading annotation. An attribute given by the character string extracting module 202 is used as the attribute. For example, the weight is calculated as follows: the programs included in the same character string are extracted from the EPG information and the weight is calculated based on the number of extracted programs or the sum of the broadcasting hours.

After registering each element of the table 404, the index generating module 204 sets the 'pointer' to each element of the character string 'figure skating' to the reading annotation applying module 203 (Step S103).

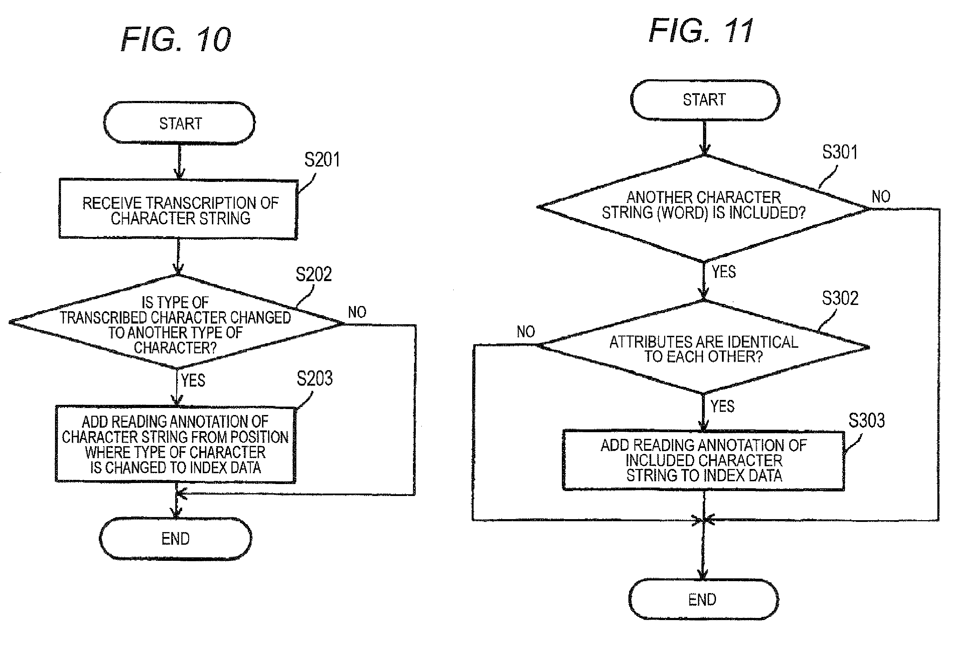

Then, the index generating module 204 registers a reading annotation from the position where the type of characters (for example, katakana, hiragana, Chinese characters, and the alphabet) in the character string is changed to the index data (Step S104). Step S 104 will be described in detail with reference to Fig. 10.

When an additional character string (word) is included in the character string, the index generating module 204 adds the reading annotation of the character string to the index data (Step S105). Step S105 will be described in detail with reference to Fig. 11.

The index generating module 204 determines whether there is the next character string (Step S106). If it is determined that there is the next character string (Step S106: Yes), the index generating module 204 repeatedly performs the operation from Step S101 to Step S105. If it is determined that there is no next character string (Step S106: No), the index generating module 204 sorts the index data into the read annotation (Step S107) and generates the Trie structure shown in Fig. 4.

Fig. 10 is a flowchart illustrating the detailed operation of Step S104.

The index generating module 204 receives the character string extracted by the character string extracting module 202 with reference to the dictionary DB 301 (Step S201). The index generating module 204 determines the type of each character in the character string from the head of the character string based on the received character string (Step S202).

If it is determined that there is a position where plural types of characters are changed in the character string, that is, if it is determined that plural types of characters are included in the character string (Step S202: Yes), the index generating module 204 adds a reading annotation from the position where the type of characters is changed to the index data stored in the index DB 302 (Step S203). On the other hand, if it is determined that there is no position where plural types of characters are changed in the character string (Step S202: No), the index generating module 204 ends the operation.

The operation shown in Fig. 10 will be described using a character string 'before and after transformation' ('Henshin Bi-fore after') as an example. First, the index generating module 204 receives the character string 'Henshin Bi-fore after' with reference to the dictionary DB 301. Then, the index generating module 204 determines the type of each character in the character string 'Henshin Bi-fore after' from the head of the character string based on the received character string.

In the character string 'Henshin Bi-fore after', the type of character is changed at the position of the character 'bi'. Therefore, the index generating module 204 adds a reading annotation 'bi-fo-a a-fu-ta-a' of the character string 'Bi-fore after' after the character string 'Henshin' as a new reading annotation of the character string 'Henshin Bi-fore after' to the index 403 and the table 404 (see 404B in Fig. 7). In this way, index data of two reading annotations for the character string 'Bi-fore after' is registered to the index DB 302.

Fig. 11 is a flowchart illustrating the detailed operation of Step S105.

The index generating module 204 determines whether another character string (another word) is included in the character string extracted by the character string extracting module 202 (Step S301). This determination may be performed with reference to the dictionary DB 301. If it is determined that another character string is included in the character string (Step S301: Yes), the index generating module 204 determines whether the attribute of the character string including another character string (the character string extracted by the character string extracting module 202) is identical to that of the included character string (another character string) (Step S302).

If it is determined that the attributes are identical to each other (Step S302: Yes), the index generating module 204 adds the reading annotation of the included character string to the index data stored in the index DB 302 (Step S303). On the other hand, if it is determined that another character string is not included in the character string (Step S301: No) or if it is determined that the attributes are not identical to each other (Step S302: No), the index generating module 204 ends the operation.

The operation shown in Fig. 11 will be described using a character string 'Sandra Crock' as an example. The index generating module 204 determines whether another character string is included in the character string 'Sandra Crock' with reference to the dictionary DB 301. Since another character string 'rock' is included in the character string 'Sandra Crock', the index generating module 204 determines whether the attribute of the character string 'Sandra Crock' is identical to that of the character string 'rock'. The attribute 'person's name' of the character string 'Sandra Crock' is different from the attribute 'music' of the character string 'rock'. Therefore, the index generating module 204 does not register the character string 'rock' to the index data stored in the dictionary DB 301.

In addition, an example in which a character string 'alpine ski' is extracted by the character string extracting module 202 is considered. Similar to the above-mentioned example, the index generating module 204 determines whether another character string is included in the character string 'alpine ski'. Another character string 'ski' is included in the character string 'alpine ski'.

The index generating module 204 determines whether the attribute of the character string 'alpine ski' is identical to that of the character string 'ski' (Step S302). The attribute 'sports' of the character string 'alpine ski' is identical to the attribute 'sports' of the character string 'ski'. Therefore, the index generating module 204 generates the index 403 and the table 404 of the character string 'ski' and registers them to the index data stored in the dictionary DB 301 (see 404C in Fig. 7).

An example in which a character string 'Scotch whiski' is extracted by the character string extracting module 202 is considered. Similar to the above-mentioned example, the index generating module 204 determines whether another character string is included in the character string 'Scotch whiski'. Another character string 'ski' is included in the character string 'Scotch whiski'.

The index generating module 204 determines whether the attribute of the character string 'Scotch whiski' is identical to that of the character string 'ski'. The attribute 'drink' of the character string 'Scotch whiski' is different from the attribute 'sports' of the character string 'ski'. Therefore, the index generating module 204 does not register the character string 'ski' to the index data stored in the dictionary DB 301.

The attributes of the character string including another character string and the included character string (another character string) are not limited to limitations based on the attributes related to sports and game names, but limitations based on the attributes related to music may be used. For example, when the attribute of the character string including another character string and the attribute of the included character string satisfy a specific relationship (the relationship between the registration of the character string to the index data and the inclusion relation between the characters), the character string may be registered to the index data. In this case, the specific relationship may be stored as table data in, for example, the HDD 101, and the included character string may be registered to the index data with reference to the table data. In addition, the program genre given to the character string may be used instead of the relationship between the attributes.

The input receiving module 205 receives the character string (hereinafter, referred to as an input character string) input by the user through the remote controller 20.

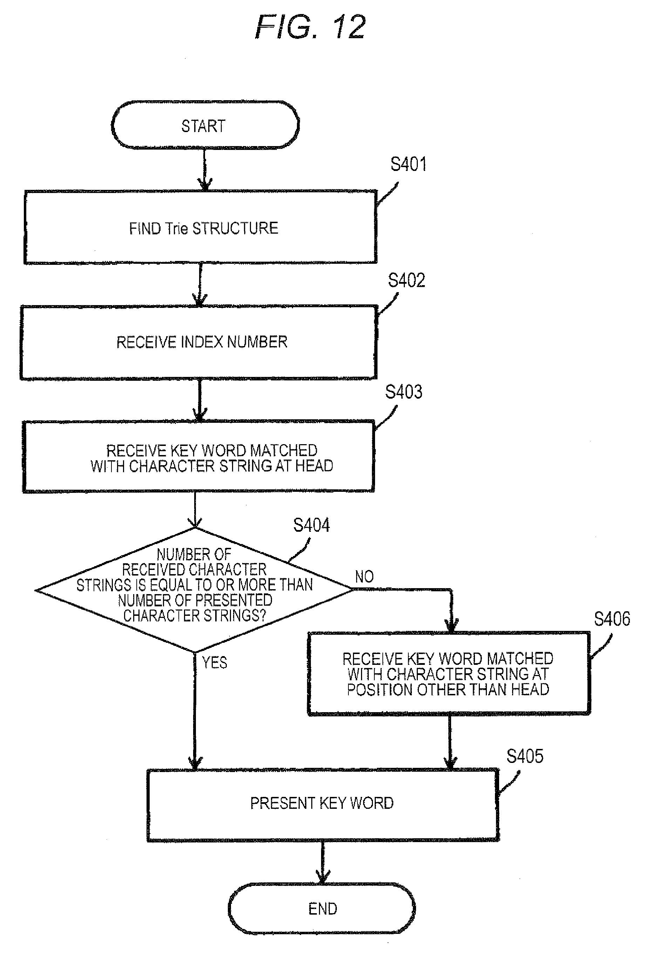

The matching check module 206 checks matching between the character string received by the input receiving module 205 and the character string registered to the index data in the index DB 302. The candidate presentation module 207 displays the character string input from the matching check module 206 as a conversion candidate on the display unit 10B and presents it to the user. Fig. 12 is a flowchart illustrating an operation of presenting the conversion candidate. Next, the operation of presenting the conversion candidate will be described with reference to Fig. 12.

The matching check module 206 finds the node 401 with the Trie structure shown in Fig. 4 based on the reading annotation of the input character string (Step S401), and receives the start number and the end number of the index list 402 from the node 401 corresponding to the input character string (Step S402). The matching check module 206 receives a character string matched with (identical to) the input character string from the head of the character string from the pointer of the index 402, with reference to the corresponding table 404 (Step S403). The matching check module 206 transmits the received character string to the candidate presentation module 207.

The candidate presentation module 207 determines whether the number of received character strings is equal to or more than the number of presented character strings (for example, 9 character strings) (Step S404). If it is determined that the number of received character strings is equal to or more than the number of presented character strings (Step S404: Yes), the candidate presentation module 207 outputs the character string received in Step S403 to the candidate presentation module 207 until the number of received character strings is equal to the number of presented character strings in decreasing order of the weight (Step S405).

If it is determined that the number of received character strings is less than the number of presented character strings (Step S404: No), the candidate presentation module 207 instructs the matching check module 206 to receive a character string that is matched with (identical to) the character string in the input character string. The matching check module 206 receives a character string that is matched with (identical to) the character string in the input character string in response to the instruction from the candidate presentation module 207 (Step S406). The matching check module 206 transmits the received character string to the candidate presentation module 207. The candidate presentation module 207 presents the character strings that are sequentially transmitted from the matching check module 206 to the display unit 10B until the number of received character strings is equal to the number of presented character strings in decreasing order of the weight (Step S405).

That is, the candidate presentation module 207 displays the character string input as a conversion candidate from the matching check module 206 on the display unit 10B and presents it to the user. In this case, the candidate presentation module 207 presents the character strings to the user in decreasing order of weight.

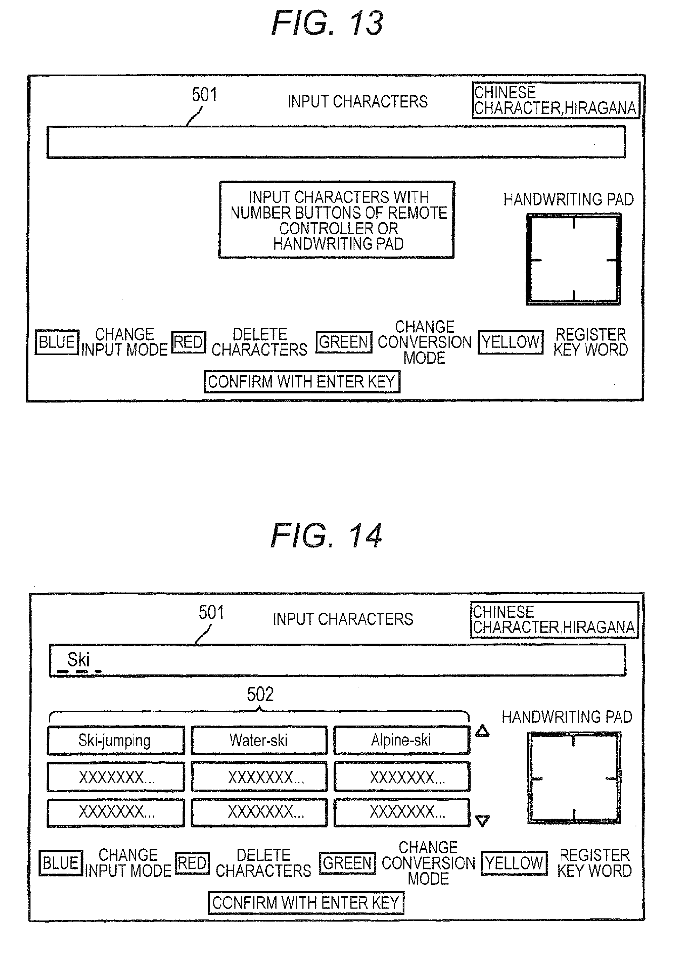

Figs. 13 and 14 are diagrams illustrating a presentation screen displayed on the display unit 10B. When the user uses the remote controller 20 to input a character string to a character string input field 501 (see Fig. 13), the character string checked by the matching check module 206 is input to the candidate presentation module 207. The candidate presentation module 207 displays the input character string in the candidate character string field 502 (see Fig. 14).

In the example shown in Figs. 13 and 14, the input character string is 'Ski'. Therefore, 'Ski-jumping', 'Water-ski', and 'Alpine-ski' are presented as conversion candidates to the user. The conversion candidates are presented in the order of the conversion candidate 'Ski-jumping' matched from the head of the character string and the conversion candidates 'Water-ski' and 'Alpine-ski' matched from the middle of the character string. However, since a person's name 'Chaikovski' has an attribute different from that of the character string, it is not presented as the conversion candidate.

In each candidate group, the candidate presentation module 207 arranges the sum of broadcasting hours of the program including the character string, which serves as the 'weight', in descending order. For example, the candidate presentation module 207 may add the number of current programs or the broadcasting time as a parameter for determining the order. When the number of conversion candidates is less than a predetermined value and when the number of input character strings is equal to or more than a predetermined value, the matching check module 206 adds a conversion candidate matched with the input character string to a position other than the head. In the embodiment, the small letters and the capital letters of the hiragana may be regarded as the same letter and combined with each other in order to correspond to a character recognition error.

Next, the overall operation of the digital TV 1 according to the embodiment will be described.

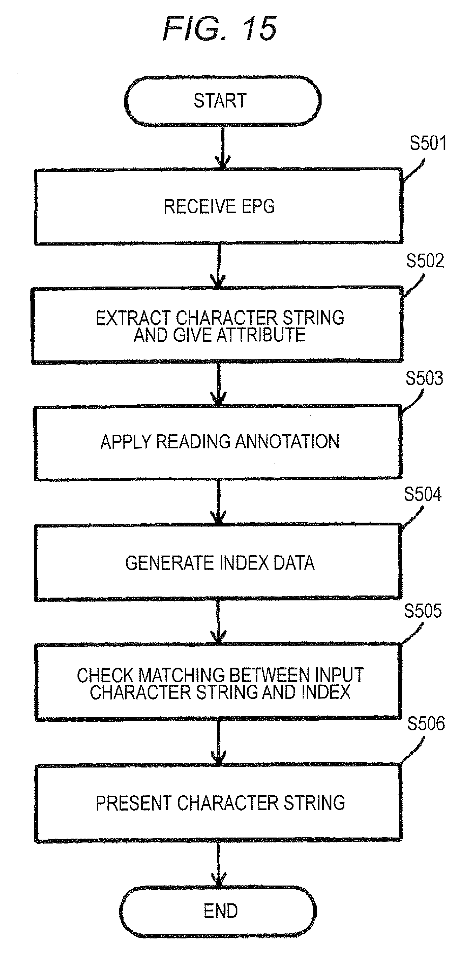

Fig. 15 is a flowchart illustrating the operation of the digital TV 1. Next, the operation of the digital TV 1 will be described with reference to Fig. 15.

The EPG receiving module 201 receives the EPG information included in the SI that is separated by the separator 104 and the previous EPG information stored in the HDD 101 (Step S501). The character string extracting module 202 extracts a character string from the received EPG information, and gives an attribute (meaning class) to the character string (Step S502).

The reading annotation applying module 203 applies a reading annotation to each character string extracted by the character string extracting module 202 with reference to the dictionary DB 301 (Step S503). The index generating module 204 generates index data matched with the character string that is received by the input receiving module 205 based on the character string having the attribute or the reading annotation applied thereto which is input from the reading annotation applying module 203 (Step S504).

The matching check module 206 checks matching between the character string received by the input receiving module 205 and the character string registered to the index data that is stored in the index DB 302 (Step S505). The candidate presentation module 207 displays the input character string checked by the matching check module 206 as a conversion candidate on the display unit 10B and presents it to the user (Step S506).

As described above, when presenting a character string that is identical to the character string extracted from an input character string at a position (middle position) other than the head of the input character string as a conversion candidate to the user, the digital TV 1 according to the embodiment presents to the user a character string from a position where the type of character is changed in the input character string or only a character string with an attribute satisfying a specific relationship. Therefore, it is possible to effectively prevent an inappropriate character string from being presented to the user (for example, when an input character string is 'ski', it is possible to prevent 'Chaikovski' from being presented to the user as a conversion candidate). In addition, it is possible to reduce the amount of index data and thus reduce the amount of memory consumed during matching.

The present invention is not limited to the above-described embodiment, but various changes and modifications can be made without departing from the scope and spirit of the invention. For example, in the presentation screen shown in Figs. 13 and 14, when the user designates the genre (the type of genre) in advance during the input of a character string, only the character string included in the same genre as the designated genre may be presented to the user. In addition, some of the components according to the above-described embodiment may be removed. The components according to the above-described embodiment may be appropriately combined with those of other embodiments.

Although the embodiment according to the present invention has been described above, the present invention is not limited to the above-mentioned embodiment but can be variously modified. Constituent components disclosed in the aforementioned embodiment may be combined suitably to form various modifications. For example, some of all constituent components disclosed in the embodiment may be removed, replaced, or may be appropriately combined with other components.

Additional advantages and modifications will readily occur to those skilled in the art. Therefore, the invention in its broader aspects is not limited to the specific details and representative embodiments shown and described herein. Accordingly, various modifications may be made without departing from the spirit or scope of the general inventive concept as defined by the appended claims and their equivalents.

## Claims

1. A candidate presentation apparatus comprising:
a dictionary in which attributes and reading annotations of character strings are stored so as to be associated with each other;
an extracting configured to extract a character string included in input data and apply an attribute to the character string with reference to the dictionary;
a reading annotation applying module configured to apply a reading annotation to the extracted character string with reference to the dictionary;
an index generating module configured to determine whether plural types of characters or words are included in the extracted character string and associates at least one of the reading annotation from a position where the type of character is changed and the reading annotation of the word in addition to the attribute and the reading annotation with the extracted character string based on the determination result to generate index data;
a storage module configured to store the index data;
a receiving module configured to receive an input character string;
a matching check module configured to check matching between the reading annotation of the input character string and the reading annotation of the character string stored in the storage module and receives the character string stored in the storage unit based on the matching check result; and
a candidate presentation module configured to present the character string received by the matching check module as a conversion candidate.

2. The apparatus of Claim 1,
wherein the index generating module is configured to store the reading annotation of the word included in the extracted character string so as to be associated with the extracted character string, when the attribute of the extracted character string and the attribute of a word included in the extracted character string satisfy a specific relationship.

3. The apparatus of Claim 1 or 2,
wherein the candidate presentation module is configured to present as the conversion candidate a character string whose reading annotation is matched with that of a character string from the position where the type of character is changed or the reading annotation of the word in the input character string, when the matching check module checks that the number of character strings matched with the reading annotation of the character string from the head of the stored character string is not equal to a predetermined value.

4. The apparatus of Claim 3,
wherein the candidate presentation module is configured to preferentially present the character string whose reading annotation is matched with that of the character string from the head of the input character string.

5. The apparatus according to any one of Claims 1 to 4,
wherein the index generating module is configured to store the index data so as to be associated with priority to the extracted character string, and
wherein the candidate presentation module is configured to present the character string received by the matching check module as the conversion candidate based on the priority.

6. The apparatus according to any one of Claims 1 to 5 further comprising:
a receiver configured to receive broadcast waves,
wherein the extracting module is configured to extract the character string from EPG data included in the broadcast waves received by the receiver.

7. A candidate presentation method comprising:
extracting a character string included in input data and applying an attribute to the character string with reference to a dictionary in which attributes and reading annotations of character strings are stored so as to be associated with each other;
applying a reading annotation to the extracted character string with reference to the dictionary;
determining whether plural types of characters or words are included in the extracted character string and associating at least one of the reading annotation from a position where the type of character is changed and the reading annotation of the word in addition to the attribute and the reading annotation with the extracted character string based on the determination result to generate index data;
storing the index data;
receiving an input character string;
checking a matching between the reading annotation of the input character string and the reading annotation of the stored character string and receiving the stored character string based on the matching check result; and
presenting the character string received by the matching check module as a conversion candidate.

8. A computer readable medium containing a program that causes a computer to perform a series of procedures comprising:
extracting a character string included in input data and applying an attribute to the character string with reference to a dictionary in which attributes and reading annotations of character strings are stored so as to be associated with each other;
applying a reading annotation to the extracted character string with reference to the dictionary;
determining whether plural types of characters or words are included in the extracted character string and associating at least one of the reading annotation from a position where the type of character is changed and the reading annotation of the word in addition to the attribute and the reading annotation with the extracted character string based on the determination result to generate index data;
storing the index data;
receiving an input character string;
checking a matching between the reading annotation of the input character string and the reading annotation of the stored character string and receiving the stored character string based on the matching check result; and
presenting the character string received by the matching check module as a conversion candidate.
